# EUROPEAN PATENT SPECIFICATION

(11) **EP 2 894 214 B1**
(45) Date of publication and mention of the grant of the patent: **10.10.2018**
(21) Application number: 14382514.9
(22) Date of filing: 15.12.2014
(51) Int. Cl.: C10M 169/04, C10M 173/02, C10M 111/04, C09G 3/00, C10N 30/06, C10N 40/00, C10N 50/02, C10N 50/08, C10N 50/10

(54) **Lubricant composition for skis**
Schmiermittelzusammensetzung für Skis
Composition de lubrifiant pour skis

(30) Priority: 17.12.2013 ES 201331849
(43) Date of publication of application: 15.07.2015
(73) Proprietor: MARTEEN SPORTS WORLD, S.L., 08018 Barcelona (ES)
(72) Inventor: Fernández Blanco, Minerva, 08225 Terrassa (Barcelona) (ES); Osset Hernández, Miquel, 08225 Terrassa (Barcelona) (ES); Josa Pons, Jaume, 08225 Terrassa (Barcelona) (ES); Escudero Moreno, Rosa, 08225 Terrassa (Barcelona) (ES)
(74) Representative: Gallego Jiménez, José Fernando

(56) References cited:
- WO-A1-2009/010626
- CA-A1- 2 498 447
- US-A1- 2006 107 870
- REDDY C S K ET AL: "Polyhydroxyalkanoates: an overview", BIORESOURCE TECHNOLOGY , vol. 87, no. 2 April 2003 (2003-04), pages 137-146, XP002489595, ISSN: 0960-8524, DOI: 10.1016/S0960-8524(02)00212-2 Retrieved from the Internet: URL:http://dx.doi.org/10.1016/S0960-8524(0 2)00212-2 [retrieved on 2008-07-23]

## Description

### Technical Field

The present invention relates to lubricant products for improving the sliding properties of the skis, which have a high efficacy and furthermore are non-detrimental to the environment.

### Technical Background

It is very common in the sport of skiing to use waxes that are applied on the lower sliding surface of the skis in order to decrease friction between this surface and the snow, thereby improving the sliding.

There are a considerable variety of ski waxes on the market that are available in solid or liquid form, and also in paste form.

Traditionally, the waxes have been available mainly in solid form, and are applied by previously melting them and distributing them on the sliding surface of the ski with the help of a hot iron.

On the other hand, liquid waxes are mainly applied by spraying or alternatively with applicators provided with a sponge. In general, the liquid waxes available on the market have a high proportion of different organic solvents, so that its application can be unpleasant due to its penetrating odour.

A large part of the commercially available ski waxes are formulated from saturated hydrocarbons, mainly from paraffins or microcrystalline wax. Also synthetic waxes are occasionally used. All of them are derived directly or indirectly from petroleum.

Paraffin wax is mainly composed of linear saturated hydrocarbons of between 20 and 40 carbon atoms. In turn, the microcrystalline wax contains a higher percentage of branched and cyclic hydrocarbons, having a length of approximately between 30 and 100 carbon atoms.

Frequently, ski wax compositions also contain other additives in a greater or a lesser proportion to improve their sliding properties, for example, the use of fluorinated hydrocarbons is very common, such as perfluoroalkanes or polytetrafluoroethylene (PTFE or Teflon), among others, as well as other additives such as graphite, molybdenum or silicones.

In the recent years, certain problems have arisen related to the use of the commercially available ski waxes.

First of all, most of them are products derived from petroleum, that is, from non-renewable sources, which is already a disadvantage.

Furthermore, as they usually contain poorly biodegradable ingredients, they currently constitute a serious environmental problem, since their massive use derived from the growing popularity of the sport of skiing implies that part of the wax applied to the ski, and that is released during its use, is being deposited on the surface of the snow. Later, after the thaw, these substances penetrate into the ground and the different aquatic systems, being thus incorporated into the ecosystem.

It is also remarkable the possible toxicity for the user himself resulting from the application of some waxes, particularly those containing fluorinated hydrocarbons, since when they are applied by heating at very high temperatures, they can decompose and create noxious vapours. In this regard, several studies have been published correlating the presence of perfluorinated compounds in the plasma of certain individuals with the practice of ski waxing, for example as described in the article Freberg et al. Occupational exposure to airborne perfluorinated compounds during professional ski waxing. Environ. Sci. Technol., 2010, 44 (19), 7723-8.

Therefore, there is a need to develop improved alternative formulations of ski waxes, that use renewable sources, that are safer and more comfortable to use for the user and also less harmful to the environment.

In this context, several alternatives have already been disclosed in the prior art to replace the waxes derived from the petrochemical industry by other waxes of plant or animal origin, although the formulations developed so far in this field are scarce and of limited efficacy.

Thus for example, in the US patent application US-A-2006/0107870 ski wax formulations are described whose main component is soy wax, combined with other waxes of plant or animal origin and optionally with other additives, such as graphite, colorants and perfumes. A preferred composition contains, for example, 50% of soy wax, 15% of beeswax, 15% of carnauba wax and 20% of candelilla wax.

In the Canadian patent application CA-A-2498447 ski lubricating compositions are described containing waxes of plant origin, optionally with other additional ingredients, for example, magnesium stearate or stearate derived from palm oil, citric acid, or graphite, for example. The compositions are prepared by melting the different waxes, adding the additional components and pouring the mixture into a mold where it solidifies.

In the US patent application US-A-2010/0087345 ski lubricant compositions in solid form are described containing a mixture of beeswax and candelilla wax, optionally with carnauba wax and other additional components, for example other waxes, vegetable oils, silicones and fluoropolymers.

Despite the solutions described in the prior art, there remains a need to provide new compositions for lubricating skis and other analogous sliding sport equipment, entirely based on renewable and biodegradable sources, but that, at the same time, provide an effectiveness comparable to that of the traditional products based on petrochemical ingredients, without the need to incorporate additives such as fluorinated hydrocarbons. It is also desirable to have forms that allow a comfortable and safe application for the user, without the drawbacks associated to the waxes currently available on the market.

### Object of the invention

The object of the present invention is a composition comprising soy wax and a polyhydroxyalkanoate.

Also part of the invention is the use of this composition for the lubrication of skis and other winter sliding sports equipment.

Also part of the invention is the use of an aqueous emulsion of soy wax to lubricate skis and other winter sliding sports equipment.

### Brief description of the figures

### Figure 1

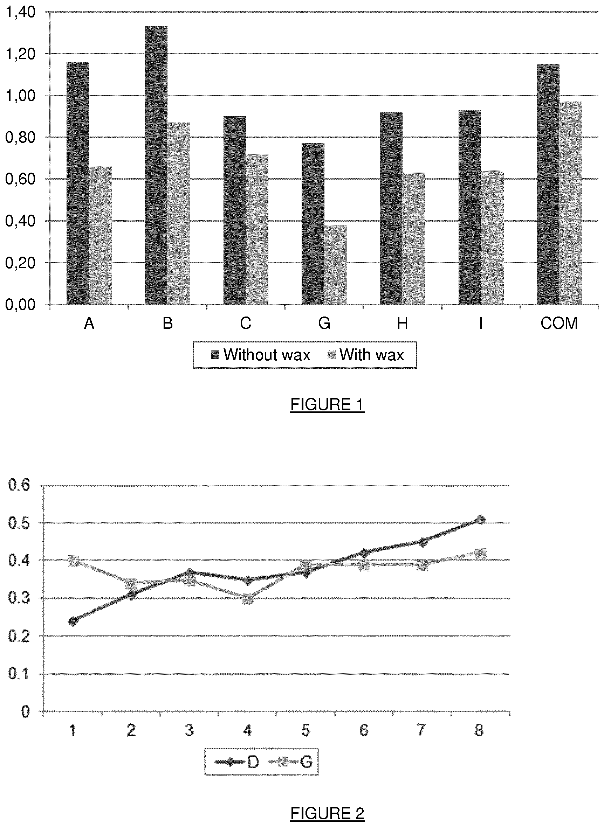

In the graphic of Figure 1 it is represented the decrease of the friction coefficient observed with six lubricant compositions according to the present invention (A, B, C, G, H, I) and with a commercial wax (COM), according to the test based on the ASTM standard D1894-11e1, which is described in Example 2. The ordinate represents the average values of the initial dynamic friction coefficient obtained in the test, while the abscissa represents each of the tested compositions, where the dark bar represents the value of the value of the friction coefficient before applying the product and the pale bar represents the value after applying the lubricant composition.

### Figure 2

In the graphic of Figure 2 it is represented the dynamic friction coefficient according to said test for two of the compositions according to the present invention (D and G), specifying here the value of the friction coefficient observed for each of the eight successive repetitions made after the application of a single dose of the composition on the test surface. Thus, the ordinate axis represents the values of the friction coefficient and the abscissa represents each of the successive repetitions made with a single dose of the product, from the first (1) immediately after applying the product, to the last (8).

### Detailed description of the invention

The object of the present invention is a lubricant composition for improving the sliding of the winter sliding sports equipment comprising soy wax and a polyhydroxyalkanoate, as defined in claim 1.

The authors of the present invention have developed a composition for lubricating skis and other similar equipment that slide over the snow, which is completely based on renewable sources, is biodegradable, and comprises the combination of soy wax with a polyhydroxyalkanoate. Said composition surprisingly shows excellent properties as a lubricant and provides a prolonged duration of its effect.

Throughout the present description, the stated percentages of the various components are referred always to percentages by weight/weight over the total weight of the composition, unless otherwise stated.

Likewise, in the present description the term "approximately" before a given numeric value indicates that a variation of more or less a 2% of said value is accepted.

In the present description, as well as in the claims, the singular forms "a", "an" or "the" include also the plural reference unless the context clearly indicates otherwise.

### Polyhydroxyalkanoates

Polyhydroxyalkanoates, often abbreviated as PHA, are linear polyesters, of natural origin, formed as a result of the polymerization of hydroxycarboxylic acids.

PHA are easily biodegradable, in contrast to the polymers based on the petrochemical industry such as paraffins or the perfluorocarbons.

PHA are synthesized by different types of bacteria, as is well known to the skilled in the art, and can be isolated and/or purified by methods that are also well known.

Thus, the industrial production of PHA is usually carried out by fermentation by cultivating recombinant bacteria. Its production has also been described by means of genetically modified plants or by anaerobic fermentation of biological waste as described, for example, in the article Reddy et al. Polyhydroxyalkanoates: an overview. Bioresource Technol., 2003, 87 (2), p137-146.

After the fermentation process, the synthesized PHA can be isolated and purified from the bacterial media where they are, for example as described in the book G.J.L. Griffin, Chemistry and Technology of Biodegradable Polymers, Springer, 1993, ISBN 0751400033.

The PHA according to the composition of present invention can have an average molecular weight by mass comprised between 5000 and 2000000 g/mol, more preferably comprised between 80000 and 300000 g/mol, wherein this molecular weight can be measured, for example, by size exclusion chromatography (SEC).

The hydroxycarboxylic acids that constitute the monomers of the PHA have a hydroxyl group which is generally in the position 2 to 6, relative to the carboxylic group. Additionally, these hydroxycarboxylic acids can be substituted, for example, by alkyl, aryl, alkenyl, halogen, cyano, epoxy, ether, ester or carboxyl groups, among others.

The PHA can be homopolymers, i.e., based on a single monomer, or copolymers, i.e., containing at least two different monomers, in any proportion, so all of them are included within the scope of the present invention.

The composition according to the present invention comprises a PHA composed of the following monomers: 2-hydroxybutanoic acid (n=0, R=ethyl), 3-hydroxybutanoic acid (n=1, R=methyl), 4-hydroxybutanoic acid (n=2, R=H), 3-hydroxyvaleric acid (n=1, R=ethyl), 3-hydroxyhexanoic acid (n=1, R=*n*-propyl), or 3-hydroxyoctanoic acid (n=1, R=*n*-pentyl), either as homopolymer formed from only one of those monomers, or as a co-polymer formed from at least two of the previous monomers.

More preferably, the composition of the invention comprises a PHA which is selected from the following homopolymers and co-polymers: poly-3-hydroxybutyrate (P3HB), poly-3-hydroxybutyrate-co-3-hydroxyvalerate (P3HB-3HV), poly-3-hydroxybutyrate-co-4-hydroxybutyrate (P3HB-4HB), poly-3-hydroxybutyrate-co-3-hydroxyvalerate-co-4-hydroxybutyrate (P3HB-3HV-4HB), and mixtures thereof.

Many PHA are commercially available, for example through the companies Biomer (Biomer® P209, Biomer® P226, Biomer® P300 or Biomer® P304), TianAn Biopolymer (ENMAT® Y1000, ENMAT® Y1000P or ENMAT® Y3000P) or BYK (Ceraflour® 1000).

In a preferred embodiment of the invention, the lubricant composition comprises a polyhydroxyalkanoate which is Ceraflour® 1000.

### Soy wax

In general, the distinction between the terms "wax" and "oil" for a given fat product refers basically to its melting point, so it is considered to be a wax when is solid at room temperature, while it is called oil when is liquid under the same conditions.

The triglycerides are esters of fatty acids and glycerol, in which the three hydroxyl groups of glycerol are esterified. The main factors that determine whether a triglyceride is solid or liquid at room temperature are the degree of saturation or unsaturation of the fatty acids that constitute it, as well as their chain length. In general, the higher are the saturation degree and the length of the triglyceride's fatty acids chain, the higher is its melting point.

The soy oil mainly contains a mixture of triglycerides, mainly mono- or polyunsaturated, the majority being derived from linoleic, oleic, and alpha-linolenic acid.

The soy wax is obtained by hydrogenation of the soy oil, by methods that are well known to the skilled on the art.

One can distinguish different types of soy wax according to its degree of hydrogenation, which in turn determines its melting point, so that, the greater the hydrogenation the higher the melting point is. So the soy wax can be classified into high melting point soy wax and low melting point soy wax.

Within the context of the present invention, high melting point soy wax is that one whose melting point is above 50° C, while low melting point soy wax is that one whose melting point is 50° C or lower.

The soy wax can be obtained commercially through, for example, the company Nature's Gifts International LLC.

The soy wax suitable to be used in compositions according to the present invention includes any type of soy wax, with any degree of hydrogenation, including both the so-called high melting point and low melting point, and mixtures thereof.

Typically, the soy wax employed in the composition of the invention comprises between 50% and 100% of high melting point soy wax and between 0% and 50% of low melting point soy wax, provided that the total of them is 100%.

In all the embodiments of the present invention, a part of the soy wax, preferably not more than 50%, may be replaced by other waxes of natural origin, such as, for example, beeswax or carnauba wax, or other waxes derived from the hydrogenation of various vegetable oils such as palm oil, corn oil, sunflower oil, peanut oil, olive oil or cottonseed oil, among others.

### Composition

In the compositions of the invention the weight ratio between soy wax:polyhydroxyalkanoate is comprised between 2:1 and 200:1.

The compositions of the invention may be in liquid form, of more or less viscous texture, or in solid form.

### Liquid compositions

In an embodiment of the invention the lubricant composition is an aqueous liquid composition.

In the context of the invention, a liquid composition refers to a composition that has a viscosity generally comprised between approximately 50 mPa.s and aproximately 100,000 mPa.s. In the lower part of the range, the composition behaves as a fluid liquid and in the upper part of the range it behaves as a cream. Preferably, the viscosity is comprised between 1,000 mPa.s and 60,000 mPa.s, and still more preferably between 2,000 mPa.s and 10,000 mPa.s.

The designation aqueous composition within the context of the invention means that the composition comprising the soy wax, together with the polyhydroxyalkanoate, is in emulsion form with water as the continuous phase.

The aqueous composition preferably comprises between 3% and 40% of soy wax, more preferably between 4% and 30%, and still more preferably between 5% and 20%, expressed by weight.

The weight ratio between soy wax:polyhydroxyalkanoate is preferably comprised between 2:1 and 20:1. Thus, the percentage by weight of polyhydroxyalkanoate in the aqueous composition of the invention, according to this ratio, is comprised between 0.15% and 20%.

In a particularly preferred embodiment, the weight ratio between soy wax:polyhydroxyalkanoate is comprised between 13:1 and 17:1, more preferably is of approximately 15:1.

In another particularly preferred embodiment, the weight ratio between soy wax:polyhydroxyalkanoate is comprised between 5:1 and 10:1, more preferably is of approximately 7.5:1.

In such liquid compositions, a higher or lower content of soy wax, as well as its degree of hydrogenation, make it have a more or less viscous consistency.

Thus, a preferred embodiment is an aqueous composition comprising between 10% and 20% of soy wax, more preferably approximately 15%; and between 0.5% and 3% of a polyhydroxyalkanoate, more preferably between 0.5% and 1.5%.

Preferably, in this embodiment the soy wax used comprises between 70% and 100%, more preferably between 85% and 100% and still more preferably the 100% of high melting point soy wax; and between 0% and 30%, more preferably between 0% and 15% and still more preferably the 0% of low melting point soy wax, so that the total of the percentages of both kinds is 100%.

This embodiment allows obtaining a composition of a more viscous texture.

Another particularly preferred embodiment is an aqueous composition comprising between 5% and 10% of soy wax, more preferably approximately 7.5%; and between 0.5% and 3% of a polyhydroxyalkanoate, more preferably between 0.5% and 1.5%.

Preferably, in this embodiment, the soy wax used comprises between 50% and 80%, more preferably between 60% and 70% and still more preferably approximately 65% of high melting point soy wax; and between 20% and 50%, more preferably between 30% and 40% and still more preferably approximately 35% of low melting point soy wax, so that the total of the percentages of both kinds is 100%.

This embodiment allows obtaining a composition of a more liquid texture.

When the lubricant composition according to the invention is in an aqueous emulsion form, such composition preferably further comprises an emulsifier.

The preparation of emulsions and the emulsifying agents suitable to prepare them are well known to the skilled in the art, and are described for example in the chapter W.C. Griffin Emulsions in Kirk-Othmer Enclyclopedia of Chemical Technology, 2nd ed. Vol. 8, Interscience.; New York, 1965, p117-154, or in the book Bennett et al. Practical Emulsions. Volume 1. Materials and equipment, Chemical Publishing Company, New York, 1968.

As is well known to the skilled in the art, the emulsifiers are surfactant agents, which are amphiphilic substances having a hydrophobic part and a hydrophilic part and that act as emulsion stabilizers due to their ability to lower its surface tension and/or its interfacial tension.

A large variety of surfactant products can be commercially obtained from various suppliers, such as, for example, the companies Kao Corporation, BASF, Croda, Huntsman, Evonik, among other.

Among the anionic surfactants suitable to be used as emulsifiers in the aqueous compositions of the present invention are, for example, soaps, alkylbenzene sulfonic acids and their salts, sulfonated α-olefins, sulfonated paraffins, alkyl sulfates, alkyl ether sulfates, glycerine ether sulfates, alkyl sulfosuccinates, carboxylic acid ethers and their salts, alkyl phosphates, alkyl ether phosphates, alkylphenol sulfates, alkylphenol ether sulfates, isethionates, sarcosinates, taurates, and *N*-acylamino acid salts.

Also, among the nonionic surfactants suitable to be used as emulsifiers in the aqueous compositions of the present invention are, for example, ethoxylated fatty alcohols, ethoxylated fatty acids, ethoxylated alkylphenols, fatty acid alkanolamides, ethoxylated fatty acid alkanolamides, ethoxylated fatty amines, fatty amine oxides, fatty amidoamine oxides, esters of glycerine and fatty acids, sorbitan esters, ethoxylated sorbitan esters, sucrose esters, alkylpolyglycosides, ethylene oxide / propylene oxide copolymers, among others.

Furthermore, among the amphoteric surfactants suitable as emulsifiers in the context of the present invention are, for example, alkyldimethylbetaines, alkylamidobetaines, alkylsulfobetaines, alkylamidosulfobetaines, imidazoline derivatives and alkylaminopropionates, among others.

Finally, the cationic surfactants suitable to be used as emulsifiers in the compositions of the present invention are quaternary ammonium compounds such as, for example, benzalkonium chloride, quaternized fatty amines, or quaternized alkanolamine fatty acid ester.

In the book M. Asch and I. Asch, Handbook of Industrial Surfactants, Fourth Edition, Synapse Information Resources, 2005, an extensive list of the commercially available surfactants can be found.

Thus, in a preferred embodiment, the composition of the invention comprises an emulsifier which is selected from the group consisting of anionic, nonionic, cationic, amphoteric surfactants, as described above, and mixtures thereof.

Preferably, the emulsifying agent is selected from an ethoxylated fatty alcohol, an ethoxylated fatty acid, ethylene oxide / propylene oxide copolymers, soap, and mixtures thereof.

In a preferred embodiment of the invention, the emulsifying agent is soap. As is well known to the skilled in the art, soap is an anionic surfactant formed by the salt of a fatty acid, usually with an alkali metal, such as the sodium salt or the potassium salt. Within the context of the present invention, preferably, the soap is formed *in situ* during the preparation of the emulsion, by adding separately the corresponding fatty acid or fatty acids, together with the base, preferably sodium hydroxide (NaOH) or potassium hydroxide (KOH).

In a further preferred embodiment, the emulsifying agent consists of a mixture of lauric acid and palmitic acid, neutralized with potassium hydroxide.

Preferably, the composition of the invention comprises between 1% and 10%, expressed by weight, of an emulsifying agent, more preferably between 2% and 5%.

Preferably, the aqueous emulsion which is part of the present invention further contains a preservative. The preservatives suitable to be used in the context of the present invention are, for example, parabens such as methyl or ethyl *p*-hydroxybenzoate, quaternary ammonium compounds, or ethanol, among others, as are well known to the skilled in the art.

In a preferred embodiment, the composition comprises ethanol as a preservative agent. Preferably comprises between 3% and 10%, by weight, of ethanol, more preferably between 4% and 8%.

In a particularly preferred embodiment, the aqueous composition according to the present invention consists essentially of:
- between 5% and 20% of soy wax;
- between 0,5 % and 10% of polyhydroxyalkanoate;
- between 0,5% and 7% of lauric acid potassium salt;
- between 0,2% and 5% of palmitic acid potassium salt;
- between 3% and 10% of ethanol; and
- between 70% and 90% of water;
wherein all the percentages are expressed by weight and their sum is 100%.

Preferably, the weight ratio between soy wax:polyhydroxyalkanoate in said composition is comprised between 2:1 and 20:1.

The preparation of the emulsion can be done according to methods that are well known to the skilled in the art, for example, as described in the documents W.C. Griffin or Bennett *et al*., cited above.

Generally, they are prepared using equipment provided with stirring and with devices for heating and controlling the temperature.

Thus, for example, the emulsion can be prepared by first melting the wax together with the emulsifying agent, above the melting temperature of the wax, together with a small percentage of water and NaOH or KOH. Then the remaining water is added to cause inversion of the emulsion. Once the mixture is at room temperature the polyhydroxyalkanoate and ethanol are added, leaving the mixture to stand until complete stabilization.

### Solid compositions

In another embodiment of the invention,the lubricant composition is in solid form. Within the context of this invention, a composition in solid form means a composition that is substantially free of solvents, either water or organic solvents, that is, having less than 5% of solvent, preferably less than 2%, and more preferably less than 1%.

In the case of solid compositions, they preferably comprise:
- between 80% and 99.5% of soy wax, more preferably between 95% and 99.5%; and
- between 0.5% and 20% of polyhydroxyalkanoate, more preferably between 0.5% and 5%.

In one embodiment of the invention, the lubricant composition in solid form contains at least another wax of natural origin in addition to the soy wax, which is selected from beeswax, carnauba wax, or from hydrogenated oils of palm, corn, sunflower, peanut, olive or cottonseed. In this case, part of the soy wax of the composition is replaced by one or more of these waxes; preferably no more than 50% of the soy wax is replaced.

Optionally, the composition may also contain other additional components, such as, for example, a colorant, a perfume and/or graphite.

The composition may contain a colorant for decorative purposes, or to distinguish different types of particular compositions. When the composition contains a colorant, preferably comprises less than 0.1%, more preferably less than 0.05%.

The composition may contain graphite which contributes to improve the efficacy of the wax. When the composition contains graphite, preferably comprises between 0.05% and 1%.

The composition may contain perfume that helps to improve its organoleptic perceptions. When the composition contains perfume, preferably comprises less than 1%, more preferably less than 0.1%.

The preparation of the solid compositions can be performed by melting the soy wax, optionally in combination with other waxes as described above, together with the polyhydroxyalkanoate. The mixture is introduced into a mould and is allowed to cool. Optionally, the additional components are added such as colorant, perfume or other additives to improve the lubricant capacity, such as graphite.

When the composition is in solid form, the lubrication of the skis or similar equipment is performed following a method analogous to the one used with other solid waxes derived from paraffins, that is, by melting the wax with a hot iron and subsequently distributing the melted wax on the surface of the ski.

### Uses

The composition of the present invention is used as a lubricant for winter sliding sports equipment. Within the context of the present invention, winter sliding sports equipment refers to all types of skis, sliding boards like snowboards, sleds, and the like.

According to the results from the efficacy tests carried out, as shown in Example 2, the compositions prepared are remarkably effective in the improving of sliding, with a reduction of the friction coefficient comparable or superior to that obtained with a commercial wax based on petrochemical lubricants such as paraffin and fluorocarbon derivates.

The lubricant composition with the combination of soy wax and a polyhydroxyalkanoate shows an outstanding efficacy since, surprisingly, it has the additional effect that the sliding improvement is maintained for a longer period of time, as is apparent from the results shown in Table 3 of Example 2, or as is graphically represented in Figure 2.

Therefore, part of the object of the present invention is the use of the composition of the invention for lubricating winter sliding sports equipment, preferably for lubricating all types of skis and snowboards.

The liquid emulsions prepared within the scope of the present invention are compositions of an aqueous base and, because of this, they have applicative advantages for the user, as they are comfortable to use and do not have an offensive smell since they lack the characteristic penetrating odour of the compositions based on organic solvents. Surprisingly, the aqueous emulsions comprising soy wax as a lubricant show notable efficacy in the improvement of the sliding properties, without the disadvantages associated to the waxes derived from paraffin.

Therefore, part of the object of the present invention is also the use of an aqueous emulsion comprising soy wax, substantially free of lubricants of petrochemical origin for the lubrication of winter sliding sports equipment, particularly skis and snowboards.

Preferably, this use refers to a soy wax aqueous emulsion comprising:
- between 3% and 40%, expressed by weight, of soy wax, more preferably between 4% and 30%, and more preferably between 5% and 20%; and
- between 1% and 10%, expressed by weight, of an emulsifying agent;
more preferably the emulsifying agent is a soap, and still more preferably the soap is a salt of palmitic acid or a salt of lauric acid, or a mixture thereof.

In a particularly preferred embodiment, part of the present invention is the use for the lubrication of winter sliding sports equipment, particularly of skis and snowboards, of an aqueous emulsion consisting essentially of:
- between 5% and 20% of soy wax;
- between 0.5% and 7% of lauric acid potassium salt;
- between 0.2% and 5% of palmitic acid potassium salt;
- between 3% and 10% of ethanol; and
- between 70% and 90% of water;
wherein all percentages are expressed by weight and their sum is 100%.

Below some examples are included to illustrate the present invention, but they should not be construed as limiting the scope thereof.

### Example 1: Aqueous compositions with soy wax

Compositions in emulsion form were prepared using the components listed in Table 1.

In this table, the abbreviations HMP and LMP refer to soy wax of high melting point and low melting point, respectively. Moreover, the commercial products Edenor® C12 and Edenor® C16 correspond to fatty acids of 12 and 16 carbon atoms, respectively, that is, lauric acid and palmitic acid. The commercial product Ceraflour® 1000 is a polyhydroxyalkanoate.

**TABLE 1**

| | Composition (% by weight) | | | | | | | | |
|---|---|---|---|---|---|---|---|---|---|
| Component | A | B | C | D | E | F | G | H | I |
| HMP soy wax | 9.0 | 13.0 | 17.0 | - | - | - | - | 4.81 | 15.0 |
| LMP soy wax | - | - | - | 9.0 | 13.0 | 17.0 | 10.0 | 2.61 | - |
| Ceraflour® 1000 | - | - | - | - | - | - | 5.0 | 1.00 | 1.00 |
| Edenor® C12 | 1.88 | 1.88 | 1.88 | 1.88 | 1.88 | 1.88 | 1.88 | 1.88 | 1.88 |
| Edenor® C16 | 0.63 | 0.63 | 0.63 | 0.63 | 0.63 | 0.63 | 0.63 | 0.63 | 0.63 |
| KOH (50%) | 0.20 | 0.20 | 0.20 | 0.20 | 0.20 | 0.20 | 0.20 | 0.20 | 0.20 |
| Ethanol (96%) | 5.50 | 5.50 | 5.50 | 5.50 | 5.50 | 5.50 | 5.50 | 5.50 | 5.50 |
| Water | q.s.p. 100 | | | | | | | | |

To prepare the compositions, the same methodology was followed in all cases. First, the wax was melted together with the emulsifying agent, above the melting temperature of the wax, together with potassium hydroxide and a small percentage of water. Subsequently, the remaining water was added to cause inversion of the emulsion. Once the mixture was at room temperature the polyhydroxyalkanoate, if needed, and the ethanol were added, leaving the mixture to stand until its complete stabilization.

### Example 2: Efficacy results

The lubricating efficacy of the composition of the invention was evaluated by analyzing its effect on the friction coefficient between two surfaces, which is an indicator of the sliding capacity between them, so the lower the friction coefficient the greater is the sliding.

The friction coefficient measurement was performed according to a method based on the ASTM standard D1894-11e1.

An INSTRON dynamometer Model 5500R num. EQ152 was used, having constant elongation gradient.

The waxes to be tested were applied on a rubber square section of dimensions 63.5 mm x 63.5 mm, at conditions of 23° C of temperature and 50% of relative humidity. The skate weight was 12.20 N. The same amount of lubricant composition, 1g, was applied in all cases checking that no more than 0.05 g remainder was left after its homogeneous application.

The test was conducted so that the rubber section slid at a constant speed on the clean and dry surface of a ski. For each sample a total of 8 consecutive runs were made, measuring the value of the friction coefficient in each one of them and calculating the average value.

In Table 2 the results of the initial dynamic friction coefficient are shown, as obtained according to the above test, for some of the compositions prepared in Example 1 (A, B, C, G, H, I) and for a commercial wax (COM) based on paraffin and fluorinated hydrocarbons which was subjected to the same test. In this table the values of the friction coefficient obtained before applying the composition ("without wax") and after applying it ("with wax") are included for each product.

**TABLE 2**

| Lubricant composition | Initial dynamic friction coefficients | |
|---|---|---|
| | Without wax | With wax |
| A | 1.16 | 0.66 |
| B | 1.33 | 0.87 |
| C | 0.90 | 0.72 |
| G | 0.77 | 0.38 |
| H | 0.92 | 0.63 |
| I | 0.93 | 0.64 |
| Commercial wax (COM) | 1.15 | 0.97 |

It can be observed that the compositions of the present invention showed comparable or superior results regarding the commercial wax in this test, and in all cases a notable reduction of the friction coefficient was obtained.

The results of Table 2 are graphically represented in Figure 1.

The compositions comprising a polyhydroxyalkanoate showed not only a reduction in the friction coefficient, but it was also observed that this reduction was maintained for a longer period of time, as reflected in the values obtained in each of 8 consecutive repetitions made during the test.

This effect is shown in Table 3, where the evolution of the dynamic friction coefficient is represented according to the results obtained in each of the 8 consecutive measurements in the previously described test, comparatively between composition D, not containing polyhydroxyalkanoate, and composition G that does contain this component.

**TABLE 3**

| | Dynamic friction coefficients | |
|---|---|---|
| Run num. | Composition D | Composition G |
| 1 | 0.24 | 0.4 |
| 2 | 0.31 | 0.34 |
| 3 | 0.37 | 0.35 |
| 4 | 0.35 | 0.3 |
| 5 | 0.37 | 0.39 |
| 6 | 0.42 | 0.39 |
| 7 | 0.45 | 0.39 |
| 8 | 0.51 | 0.42 |

The results of Table 3 have been graphically represented in Figure 2.

It is thus observed that the compositions containing a polyhydroxyalkanoate maintained for a longer period of time the reduction of the dynamic friction coefficient compared to a composition that does not include it.

## Claims

1. Lubricant composition for improving the sliding of winter sliding sports equipment **characterized in that** it comprises soy wax and a polyhydroxyalkanoate;
- wherein the polyhydroxyalkanoate is either a homopolymer formed from only one monomer, or a co-polymer formed from at least two monomers, and wherein the monomer is selected from: 2-hydroxybutanoic acid, 3-hydroxybutanoic acid, 4-hydroxybutanoic acid, 3-hydroxyvaleric acid, 3-hydroxyhexanoic acid and 3-hydroxyoctanoic acid; and
- wherein weight ratio between soy wax:polyhydroxyalkanoate is comprised between 2:1 and 200:1.

2. Composition according to claim 1, **characterized in that** the polyhydroxyalkanoate is selected from poly-3-hydroxybutyrate (P3HB), poly-3-hydroxybutyrate-co-3-hydroxyvalerate (P3HB-3HV), poly-3-hydroxybutyrate-co-4-hydroxybutyrate (P3HB-4HB), poly-3-hydroxybutyrate-co-3-hydroxyvalerate-co-4-hydroxybutyrate (P3HB-3HV-4HB), and mixtures thereof.

3. Composition according to any of claims 1 or 2, **characterized in that** it is an aqueous composition.

4. Composition according to claim 3, **characterized in that** it comprises between 3% and 40%, expressed by weight, of soy wax.

5. Composition according to any of claims 3 or 4, **characterized in that** it contains an emulsifier which is selected from the group consisting of anionic surfactants, non-ionic surfactants, cationic surfactants, amphoteric surfactants, and mixtures thereof.

6. Composition according to any of claims 3 to 5, **characterized in that** it comprises between 3% and 10%, by weight, of ethanol.

7. Composition according to claim 3, **characterized in that** it consists essentially of:
- between 5% and 20% of soy wax;
- between 0,5 % and 10% of polyhydroxyalkanoate;
- between 0,5% and 7% of lauric acid potassium salt;
- between 0,2% and 5% of palmitic acid potassium salt;
- between 3% and 10% of ethanol; and
- between 70% and 90% of water;
wherein all the percentages are expressed by weight and their sum is 100%.

8. Composition according to any of claims 1 or 2, **characterized in that** it is a solid composition.

9. Composition according to claim 8, **characterized in that** it comprises:
- between 80% and 99.5%, expressed by weight, of soy wax; and
- between 0.5% and 20%, expressed by weight, of polyhydroxyalkanoate.

10. Use of a composition according to any of claims 1 to 9 for the lubrication of winter sliding sports equipment.

11. Use of an aqueous emulsion comprising soy wax, substantially free of lubricants of petrochemical origin for the lubrication of winter sliding sports equipment.

12. Use according to claim 11, **characterized in that** the aqueous emulsion comprises:
- between 4% and 30%, expressed by weight, of soy wax; and
- between 1% and 10%, expressed by weight, of an emulsifying agent.

13. Use according to claim 12, **characterized in that** the aqueous emulsion consists essentially of:
- between 5% and 20% of soy wax;
- between 0.5% and 7% of lauric acid potassium salt;
- between 0.2% and 5% of palmitic acid potassium salt;
- between 3% and 10% of ethanol; and
- between 70% and 90% of water;
wherein all percentages are expressed by weight and their sum is 100%.

## Patentansprüche

1. Schmiermittelzusammensetzung zur Verbesserung des Gleitens von Wintergleitsportausrüstung, **dadurch gekennzeichnet, dass** sie Sojawachs und ein Polyhydroxyalkanoat umfasst;
- wobei das Polyhydroxyalkanoat entweder ein Homopolymer gebildet aus nur einem Monomer oder ein Copolymer gebildet aus zumindest zwei Monomeren ist, und wobei das Monomer aus Folgendem ausgewählt ist: 2-Hydroxybutansäure, 3-Hydroxybutansäure, 4-Hydroxybutansäure, 3-Hydroxyvaleriansäure, 3-Hydroxyhexansäure und 3-Hydroxyoktansäure; und
- wobei das Gewichtsverhältnis zwischen Sojawachs:Polyhydroxyalkanoat zwischen 2:1 und 200:1 liegt.

2. Zusammensetzung nach Anspruch 1, **dadurch gekennzeichnet, dass** das Polyhydroxyalkanoat aus Poly-3-hydroxybutyrat (P3HB), Poly-3-hydroxybutyrat-co-3-hydroxyvalerat (P3HB-3HV), Poly-3-hydroxybutyrat-co-4-hydroxybutyrat (P3HB-4HB), Poly-3-hydroxybutyrat-co-3-hydroxyvalerat-co-4-hydroxybutyrat (P3HB-3HV-4HB) und Mischungen davon ausgewählt ist.

3. Zusammensetzung nach einem der Ansprüche 1 oder 2, **dadurch gekennzeichnet, dass** sie eine wässrige Zusammensetzung ist.

4. Zusammensetzung nach Anspruch 3, **dadurch gekennzeichnet, dass** sie zwischen 3 % und 40 % Sojawachs, ausgedrückt in Gewicht, umfasst.

5. Zusammensetzung nach einem der Ansprüche 3 oder 4, **dadurch gekennzeichnet, dass** sie einen Emulgator umfasst, der aus der Gruppe ausgewählt ist, die aus anionischen Tensiden, nichtionischen Tensiden, kationischen Tensiden, amphoteren Tensiden und Mischungen davon besteht.

6. Zusammensetzung nach einem der Ansprüche 3 bis 5, **dadurch gekennzeichnet, dass** sie zwischen 3 Gew.-% und 10 Gew.-% Ethanol umfasst.

7. Zusammensetzung nach Anspruch 3, **dadurch gekennzeichnet, dass** sie im Wesentlichen aus Folgendem besteht:
- zwischen 5 % und 20 % Sojawachs;
- zwischen 0,5 % und 10 % Polyhydroxyalkanoat;
- zwischen 0,5 % und 7 % Laurinsäurekaliumsalz;
- zwischen 0,2 % und 5 % Palmitinsäurekaliumsalz;
- zwischen 3 % und 10 % Ethanol; und
- zwischen 70 % und 90 % Wasser;
wobei alle Prozentsätze in Gewicht ausgedrückt sind und ihre Summe 100 % beträgt.

8. Zusammensetzung nach einem der Ansprüche 1 oder 2, **dadurch gekennzeichnet, dass** sie eine feste Zusammensetzung ist.

9. Zusammensetzung nach Anspruch 8, **dadurch gekennzeichnet, dass** sie Folgendes umfasst:
- zwischen 80 % und 99,5 % Sojawachs, ausgedrückt in Gewicht; und
- zwischen 0,5 % und 20 % Polyhydroxyalkanoat, ausgedrückt in Gewicht.

10. Verwendung einer Zusammensetzung nach einem der Ansprüche 1 bis 9 zum Schmieren von Wintergleitsportausrüstung.

11. Verwendung einer wässrigen Emulsion, umfassend Sojawachs, im Wesentlichen frei von Schmiermitteln petrochemischen Ursprungs, zum Schmieren von Wintergleitsportausrüstung.

12. Verwendung nach Anspruch 11, **dadurch gekennzeichnet, dass** die wässrige Emulsion Folgendes umfasst:
- zwischen 4 % und 30 % Sojawachs, ausgedrückt in Gewicht; und
- zwischen 1 % und 10 % Emulgiermittel, ausgedrückt in Gewicht.

13. Verwendung nach Anspruch 12, **dadurch gekennzeichnet, dass** die wässrige Emulsion im Wesentlichen aus Folgendem besteht:
- zwischen 5 % und 20 % Sojawachs;
- zwischen 0,5 % und 7 % Laurinsäurekaliumsalz;
- zwischen 0,2 % und 5 % Palmitinsäurekaliumsalz;
- zwischen 3 % und 10 % Ethanol; und
- zwischen 70 % und 90 % Wasser;
wobei alle Prozentsätze in Gewicht ausgedrückt sind und ihre Summe 100 % beträgt.

## Revendications

1. Composition de lubrifiant pour améliorer le glissement des équipements de sport de glisse d'hiver **caractérisée en ce qu'**elle comprend de la cire de soja et un polyhydroxyalcanoate ;
- dans laquelle le polyhydroxyalcanoate est soit un homopolymère formé uniquement à partir d'un monomère, soit un copolymère formé à partir d'au moins deux monomères, et dans laquelle le monomère est sélectionné parmi : l'acide 2-hydroxybutanoïque, l'acide 3-hydroxybutanoïque, l'acide 4-hydroxybutanoïque, l'acide 3-hydroxyvalérique, l'acide 3-hydroxyhexanoïque et l'acide 3-hydroxyoctanoïque ; et
- dans laquelle le rapport pondéral entre cire de soja et polyhydroxyalcanoate est compris entre 2:1 et 200:1.

2. Composition selon la revendication 1, **caractérisée en ce que** le polyhydroxyalcanoate est sélectionné parmi le poly-3-hydroxybutyrate (P3HB), le poly-3-hydroxybutyrate-co-3-hydroxyvalérate (P3HB-3HV), le poly-3-hydroxybutyrate-co-4-hydroxybutyrate (P3HB-4HB), le poly-3-hydroxybutyrate-co-3-hydroxyvalérate-co-4-hydroxybutyrate (P3HB-3HV-4HB) et des mélanges de ceux-ci.

3. Composition selon l'une quelconque des revendications 1 ou 2, **caractérisée en ce que** c'est une composition aqueuse.

4. Composition selon la revendication 3, **caractérisé en ce qu'**elle comprend entre 3 % et 40 %, exprimés en poids, de cire de soja.

5. Composition selon l'une quelconque des revendications 3 ou 4, **caractérisée en ce qu'**elle contient un émulsifiant qui est sélectionné dans le groupe constitué de tensioactifs anioniques, de tensioactifs non ioniques, de tensioactifs cationiques, de tensioactifs amphotères et de mélanges de ceux-ci.

6. Composition selon l'une quelconque des revendications 3 à 5, **caractérisée en ce qu'**elle comprend entre 3 % et 10 %, en poids, d'éthanol.

7. Composition selon la revendication 3, **caractérisée en ce qu'**elle contient essentiellement :
- entre 5 % et 20 % de cire de soja ;
- entre 0,5 % et 10 % de polyhydroxyalcanoate ;
- entre 0,5 % et 7 % de sel de potassium d'acide laurique ;
- entre 0,2 % et 5 % de sel de potassium d'acide palmitique ;
- entre 3 % et 10 % d'éthanol ; et
- entre 70 % et 90 % d'eau ;
dans laquelle tous les pourcentages sont exprimés en poids et leur somme est de 100 %.

8. Composition selon l'une quelconque des revendications 1 ou 2, **caractérisée en ce que** c'est une composition solide.

9. Composition selon la revendication 8, **caractérisée en ce qu'**elle comprend :
- entre 80 % et 99,5 %, exprimés en poids, de cire de soja ; et
- entre 0,5 % et 20 %, exprimés en poids, de polyhydroxyalcanoate.

10. Utilisation d'une composition selon l'une quelconque des revendications 1 à 9 pour la lubrification d'équipements de sport de glisse d'hiver.

11. Utilisation d'une émulsion aqueuse comprenant de la cire de soja, sensiblement dépourvue de lubrifiants d'origine pétrochimique pour la lubrification d'équipements de sport de glisse d'hiver.

12. Utilisation selon la revendication 11, **caractérisée en ce que** l'émulsion aqueuse comprend :
- entre 4 % et 30 %, exprimés en poids, de cire de soja ; et
- entre 1 % et 10 %, exprimés en poids, d'un agent émulsifiant.

13. Utilisation selon la revendication 12, **caractérisée en ce que** l'émulsion aqueuse contient essentiellement :
- entre 5 % et 20 % de cire de soja ;
- entre 0,5 % et 7 % de sel de potassium d'acide laurique ;
- entre 0,2 % et 5 % de sel de potassium d'acide palmitique ;
- entre 3 % et 10 % d'éthanol ; et
- entre 70 % et 90 % d'eau ;
dans laquelle tous les pourcentages sont exprimés en poids et leur somme est de 100 %.
